# EUROPÄISCHE PATENTANMELDUNG

(11) **EP 0 718 458 A1**
(43) Veröffentlichungstag der Anmeldung: **26.06.1996**
(21) Anmeldenummer: 95120008.8
(22) Anmeldetag: 19.12.1995
(51) Int. Cl.: E05F 15/14, B60P 3/03, E06B 5/11

(54) **Gepanzerte Schiebetür**

(30) Priorität: 23.12.1994 DE 4446403; 28.09.1995 DE 29515518 U
(71) Anmelder: Apprich Secur 2000 GmbH, D-14962 Ludwigsfelde (DE)
(72) Erfinder: Apprich, Harri, 14974 Ludwigsfelde (DE)
(74) Vertreter: Gossel, Hans K., Dipl.-Ing.

(57) **Zusammenfassung**

Die Erfindung betrifft eine gepanzerte Schiebetür (1) für gegen Beschuß, Einbruch, Aufbruch und unbefugten Zugang zu sichernde Räume, vorzugsweise für gepanzerte Fahrzeuge zum Transport von Geld und/oder Wertgegenständen oder von zu sichernden Personen, die in Führungen (40,41) der mit der Türöffnung versehenen Wand oder angrenzender Teile verschieblich geführt ist. Um eine gepanzerte Schiebetür zu schaffen, die automatisch bewegbar und verschließbar ist, sind im Bereich der Oberseite und/oder Unterseite Schiebetürrollen (45-47) oder Gleitelemente befestigt, die in Führungen (40,41) laufen, und ist ein mit einem Elektromotor (7) versehener, selbsthemmender Linearantrieb (5) vorgesehen, der die Schiebetür zwischen ihrer geöffneten und ihrer geschlossenen Stellung bewegt. Handelt es sich insbesondere um eine Fahrzeug-Schiebetür, die in Schließstellung bündig mit der umgebenden Wandung abschließt und die im geöffneten Zustand parallel versetzt zur Schließstellung zwischen einer Zwischenstellung und einer Öffnungsstellung in Führungen entlang der Wandung bewegbar ist, so ist ein mit einem Elektromotor versehener Hauptantrieb (106-109) vorgesehen, der die Schiebetür zwischen der Öffnungsstellung und der Zwischenstellung im wesentlichen parallel zur Wandung bewegt, und ist ein mit eine Elektromotor (125) versehener Hilfsantrieb (121-124) vorgesehen, der die Schiebetür unabhängig von dem Hauptantrieb zwischen der Zwischenstellung und der Schließstellung im wesentlichen senkrecht zur Wandung bewegt.

## Beschreibung

Die Erfindung betrifft eine gepanzerte Schiebetür für gegen Beschuß, Einbruch, Aufbruch und unbefugten Zugang zu sichernde Räume, vorzugsweise für gepanzerte Fahrzeuge zum Transport von Geld und/oder Wertgegenständen oder von zu sichernden Personen, die in Führungen der mit der Türöffnung versehenen Wand oder angrenzender Teile verschieblich geführt ist.

Gepanzerte Transporter für Geld und/oder Wertgegenstände und gepanzerte Kraftfahrzeuge, die der Beförderung besonders gefährderter Personen dienen, sind in unterschiedlichen Ausführungsformen bekannt. Derart gesicherte Fahrzeuge besitzen üblicherweise auch gegen Beschuß, Ein- und Aufbruch gesicherte Schiebetüren. Gepanzerte Schiebetüren sind auch zur Sicherung von Gebäuden bekannt. Trotz der Sicherheitseinrichtungen für gepanzerte Fahrzeuge, die dem Transport von Geld- und Wertgegenständen und dem Insassenschutz dienen, gelingt es kriminellen Personen immer wieder, gepanzerte Fahrzeuge rechtswidrig aufzubrechen und auch gepanzerte Schiebetüren von Gebäuden zu überwinden. Um kriminelle Elemente überhaupt wegen der zu erwartenden Erfolgslosigkeit von dem Versuch abzuhalten, gepanzerte Türen von Gebäuden aufzubrechen und gepanzerte Fahrzeuge zu überfallen und deren Türen durch Nötigung des Fahrers oder des Begleitpersonals öffnen zu lassen oder die Türen gewaltsam aufzubrechen, ist es ein Bedürfnis, die Türen derart zu sichern, daß sie weder durch Gewalteinwendung noch durch Nötigung des Fahrers oder befugter Personen geöffnet werden können.

Aufgabe der Erfindung ist es, eine gepanzerte Schiebetür der eingangs angegebenen Art zu schaffen, die automatisch bewegbar und verschlißbar ist.

Erfindungsgemäß wird diese Aufgabe durch die im Patentanspruch 1 aufgeführten Merkmale gelöst. Die erfindungsgemäße Lösung besteht darin, daß im Bereich der Oberseite und/oder Unterseite Schiebetürrollen oder Gleitelemente befestigt sind, die in den Führungen laufen, und daß ein mit einem Elektromotor versehener, selbsthemmender Linearantrieb vorgesehen ist, der die Schiebetür zwischen ihrer geöffneten und ihrer geschlossenen Stellung bewegt.

Die erfindungsgemäße Schiebetür ist insbesondere dadurch gegen ein gewaltsames Aufbrechen geschützt, daß sie sich nur durch Betätigung des Elektromotors öffnen läßt. Der elektrische Linearantrieb zum Öffnen und Schließen der Schiebetür läßt sich in einfacher Weise mit einer Steuereinrichtung versehen, die eine Öffnung nur zuläßt, wenn diese bestimmungsgemäß erfolgen soll.

Eine bevorzugte Ausführungsform der erfindungsgemäßen Schiebetür besteht insbesondere darin,
- daß die Rollen aus mehreren Rollensätzen von jeweils drei um horizontale Achsen umlaufenden Rollen bestehen, von denen das Lager der mittleren Rolle jedes Rollensatzes in vertikaler Richtung verstellbar ist; und/oder
- daß die Schiebetür in Kugelschienen geführt ist; und/oder
- daß die Schiebetür in Teleskop-Kugelschienen geführt ist; und/oder
- daß der Linearantrieb aus einer Gewindespindel besteht; und/oder
- daß die Gewindespindel undrehbar und verschieblich mit der Schiebetür verbunden ist und von einer drehbar, aber in axialer Richtung unverschieblichen Spindelmutter hin- und hergehend angetrieben wird, die wand- oder rahmenfest gelagert und über ein Getriebe von dem Elektromotor antreibbar ist; und/oder
- daß die Schiebetür mit einer Zahnstange verbunden ist, die mit einem Antriebsritzel des wand- oder rahmenfesten Getriebemotors kämmt; und/oder
- daß der Linearantrieb aus einem Seilzug besteht, dessen das über Umlenkrollen laufende Seil antreibende Seiltrommel von einem wand- oder rahmenfesten Getriebemotor angetrieben wird; und/oder
- daß der Linearantrieb aus einem über Kettenräder laufenden Kettenzug besteht, dessen Antriebskettenrad von einem wand- oder oder rahmenfesten Getriebemotor angetrieben wird; und/oder
- daß der Linearantrieb aus einer hydraulischen oder pneumatischen Druckmittel-Kolben-Zylindereinheit besteht; und/oder
- daß sich der Linearantrieb auf der durch die Schiebetür gesicherten Innenseite befindet; und/oder
- daß die Rahmenkonstruktion der Schiebetür durch Hohlräume und/oder Hohlträger verstärkt ist, deren Hohlräume mit einem mit extrem harten Granulat gefülltem Harz verfüllt sind; und/oder
- daß ein verdeckter Anschluß vorgesehen ist, über den sich der Elektromotor von einer externen Stromquelle betreiben läßt; und/oder
- daß der Elektromotor mit einer Steuereinrichtung versehen ist, die die Öffnungsbewegung der Schiebetür durch willkürliche Betätigung eines Öffnungsschalters nur an vorbestimmten und/oder ungefährlichen Standorten und/oder in vorgegebenen Zeitintervallen zuläßt; und/oder
- daß die Steuereinrichtung mit einem von einem Rechner gesteuerten Weggeber verbunden ist, der den Elektromotor sperrt, wenn das Fahrzeug von der vorprogrammierten Strecke abweicht und/oder auf nicht vorherbestimmten Streckenabschnitten anhält; und/oder
- daß eine entfernte Überwachungseinrichtung vorgesehen ist, die den Fahrweg des Fahrzeugs überwacht und mit der Steuereinrichtung über Funk verbunden ist und den Elektromotor sperrt, wenn das Fahrzeug von vorbestimmten Wegen abweicht und/oder auf bestimmten Streckenabschnitten anhält; und/oder
- daß das Sperren des Elektromotors über Funk von der Zentrale aus lösbar ist; und/oder
- daß ein die Bewegung der Schiebetür unmittelbar oder mittelbar erfaßender Sensor vorgesehen ist, der mit einem Echtzeitgeber gekoppelt ist, und daß die von dem Sensor erfaßten Öffnungsbewegungen der Schiebetür mit den zugehörigen Zeiten in einen auslösbaren Speicher der Steuer- und Überwachungseinheit abgelegt werden; und/oder
- daß die Öffnungsbewegungen der Schiebetür über Funk der Überwachungseinheit der Zentrale gemeldet werden; und/oder
- daß jede nicht vorgesehene Öffnungsbewegung der Schiebetür einen Alarm in der Überwachungszentrale auslöst.

Die in den Führungen laufenden Rollen der Schiebetür bestehen zweckmäßigerweise aus mehreren Rollensätzen von jeweils drei um horizontale Achsen umlaufenden Rollen, von denen das Lager der mittleren Rolle jedes Rollensatzes in vertikaler Richtung verstellbar ist. Durch diese Verstellung läßt sich die Schiebetür justieren, so daß sie nahezu spielfrei in die Führungen eingepaßt und in diesen geführt ist.

Nach einer bevorzugten Ausführungsform ist vorgesehen, daß die Schiebetür in Kugelschienen geführt ist. Bei diesen handelt es sich um in etwa U- oder C-förmige Führungen greifende Stege, deren Seiten gegenüber den übergreifenden Flanken der Führungen durch in Käfigen laufenden Führungen abgestützt sind. Zweckmäßigerweise ist die Schiebetür in Teleskop-Kugelschienen geführt, wobei sowohl an der Tür als auch an der Wand oder Rahmenteilen Führungsschienen angeordnet sind, in denen ein teleskopierbares Zwischenstück mit Stegen gelagert ist, die über Kugeln auf den Führungsflanken der Führungsschienen laufen.

Der Linearantrieb für die Schiebetür kann aus einer Gewindespindel bestehen. Vorzugsweise ist die Gewindespindel undrehbar und unverschieblich mit der Schiebetür verbunden und von einer drehbar, aber in axialer Richtung unverschieblichen Spindelmutter hin- und hergehend angetrieben, die wand- oder rahmenfest gelagert und über ein Getriebe von dem Elektromotor angetrieben wird.

Die Schiebetür kann auch mit einer Zahnstange verbunden sein, die mit einem Antriebsritzel des wand- oder rahmenfesten Getriebemotors kämmt.

Nach einer anderen Ausgestaltung der Erfindung kann der Linearantrieb auch aus einem Seilzug bestehen, dessen das über Umlenkrollen laufende Seil antreibende Seiltrommel von einem wand- oder rahmenfesten Getriebemotor angetrieben wird. Nach einer anderen Ausführungsform besteht der Linearantrieb aus einem über Kettenräder laufenden Kettenzug, dessen Antriebskettenrad von dem wand- oder rahmenfest angeordneten Getriebemotor angetrieben wird.

Der Linearantrieb kann auch aus hydraulischen oder pneumatischen Druckmittel-Kolben-Zylindereinheiten bestehen.

Der Linearantrieb befindet sich zweckmäßigerweise auf der durch die Schiebetür gesicherten Innenseite, so daß er selbst durch die gepanzerte Schiebetür gesichert ist.

Nach einer bevorzugten Ausführungsform ist vorgesehen, daß die Rahmenkonstruktion der Schiebetür durch Hohlräume und/oder Hohlträger verstärkt ist, deren Hohlräume mit einem extrem harten Granulat gefüllten Harz verfüllt sind. Durch diese Ausgestaltung ist sichergestellt, daß die Panzerung nicht an Stellen durchbrochen werden kann, an denen sich die Lagerung der Tür und die Antriebselemente befinden.

Zweckmäßigerweise ist das Fahrzeug oder das Gebäude mit einem verdeckten Anschluß versehen, über den sich der Elektromotor von einer externen Stromquelle betreiben läßt.

Nach einer erfinderischen Weiterentwicklung ist vorgesehen, daß der Elektromotor mit einer Steuereinrichtung versehen ist, die die Öffnungsbewegung der Schiebetür durch willkürliche Betätigung eines Öffnungsschalters nur an vorbestimmten und/oder ungefährlichen Standorten und/oder in vorgegebenen Intervallen zuläßt. Diese Ausgestaltung der Erfindung stellt bei einem gepanzerten Fahrzeug sicher, daß sich die Schiebetür nur am Zielort öffnen läßt und nicht auf dem Weg zu dem Zielort. Die Schiebetür kann daher weder bei einem Überfall noch durch ungetreues Personal geöffnet werden. Ist eine derartige zusätzliche Sicherung vorgesehen, können Überfälle und eine Ausraubung durch ungetreues Personal grundsätzlich verhindert werden, weil entsprechende Eingriffe aussichtlos sind, zumindest aber als nicht erfolgreich durchführbar erscheinen.

Der jeweils von dem gesicherten Fahrzeug zum Zielort oder zu den Zielorten zurückzulegenden Weg kann vor Antritt der Fahrt einprogrammiert werden. Diese Programmierung ist aufgrund der unterdessen vorhandenen Fahrzeugleitsysteme möglich.

Zweckmäßigerweise ist die Steuereinrichtung mit einem von einem Rechner gesteuerten Weggeber verbunden, der den Elektromotor sperrt, wenn das Fahrzeug von der vorprogrammierten Strecke abweicht und/oder auf nicht vorherbestimmten Streckenabschnitten anhält.

Nach einer weiteren Ausgestaltung ist vorgesehen, daß eine entfernte Überwachungseinrichtung vorgesehen ist, die den Fahrweg des Fahrzeugs überwacht und mit der Steuereinrichtung des Fahrzeugs über Funkt verbunden ist und den die Schiebetür öffnenden Elektromotor sperrt, wenn das Fahrzeug vom vorbestimmten Wegen abweicht und/oder auf bestimmten Streckenabschnitten anhält, die keine Zielorte sind. Die entfernte Überwachungseinrichtung kann in einer Zentrale vorhanden sein, in der sich der Fahrweg des gesicherten Fahrzeugs auf einem Monitor verfolgen läßt. Die Übertragung des Fahrwegs von dem Fahrzeug zu der entfernten Überwachungseinrichtung kann durch bekannte Ortungseinrichtungen erfolgen.

Zweckmäßigerweise läßt sich der Elektromotor über Funk von der Zentrale aus sperren und auch lösen, so daß unabhängig von der Programmierung eine Sperre verhängt und auf elektronische Anforderung des Fahrers oder Begleitpersonals eine Sperre gelöst werden kann.

Nach einer besonders bevorzugten Ausführungsform der Erfindung ist vorgesehen, daß ein die Bewegung der Schiebetür unmittelbar oder mittelbar erfassender Sensor vorgesehen ist, der mit einem Echtzeitgeber gekoppelt ist, und daß die von dem Sensor erfaßten Öffnungsbewegungen der Schiebetür mit den zugehörigen Zeiten in einen auslesbaren Speicher der Steuer- und Überwachungseinheit abgelegt werden. Auf diese Weise läßt sich ein später auswertbares Protokoll erstellen, zu welchen Zeiten die Schiebetür geöffnet worden ist.

Der die Öffnungsbewegungen der Schiebetür erfaßende Sensor kann seine Signale auch über Funk an die Zentrale weitergeben, so daß sich auch von der Zentrale aus überwachen läßt, zu welchen Zeiten die Schiebetür geöffnet wird.

Der Sensor kann auch derart geschaltet sein, daß jede nicht vorgesehene Öffnungsbewegung der Schiebtür einen Alarm in der Überwachungszentrale auslöst.

Eine weitere erfindungsgemäße Lösung der oben genannten Aufgabe betrifft eine Fahrzeug-Schiebetür. Eine derartige Schiebetür ist in der Regel so ausgeführt, daß sie in Schließstellung bündig mit der umgebenden Karosserie abschließt und im geöffneten Zustand parallel versetzt dazu in Führungsschienen entlang der Karosserie bewegbar ist.

Für bestimmte Einsatzzwecke, wie zum Beispiel für Sicherheitstransporte, Krankentransporte o. dgl., besteht das Bedürfnis, eine derartige Schiebetür automatisch bewegen und verschließen zu können. Allerdings lassen sich die bekannten Linearantriebe, wie z.B. Elektromotoren mit Zahnstangen-, Spindel- oder Zugmittelgetrieben oder auch hydraulische Zylinder-Kolben-Einheiten, hierzu nicht ohne weiteres verwenden. Dies ist zum einen darin begründet, daß die Bewegung der Schiebetür nicht in einer Ebene verläuft, da die Schließstellung und die Öffnungsstellung zueinander parallel versetzt sind. Zum anderen muß zum Einrasten in die Schließstellung eine erhebliche Kraft aufgewendet werden, um die Schiebetür entgegen dem Widerstand der Türdichtungen und gegebenenfalls auch entgegen dem Widerstand einer Vorspannfeder in die Schließstellung zu bringen. Während diese Kraft wird bei manueller Betätigung in der Regel durch eine entsprechende Beschleunigung der Schiebetür bei Bewegung in die Schließstellung aufgebracht wird, müssen bei Verwendung eines automatischen Antriebs mitunter aufwendige Konstruktionen zum Schließen der Tür vorgesehen werden.

Die weitere erfindungsgemäße Lösung der oben genannten Aufgabe besteht in einer Schiebetür mit den im Patentanspruch 6 aufgeführten Merkmalen. Die erfindungsgemäße Lösung besteht darin, daß ein Hauptantrieb zum Antreiben der Schiebetür parallel zur Wandung und ein unabhängig davon arbeitender Hilfsantrieb zum Antreiben der Schiebetür senkrecht zur Wandung kurz vor Erreichen der Schließstellung vorgesehen sind.

Die Erfindung hat den Vorteil, daß Fahrzeug-Schiebetüren ohne größere Umbauarbeiten für einen automatischen Betrieb umgerüstet werden können. Dem Fahrer ist es somit möglich, eine Fahrzeug-Schiebetür vom Fahrersitz aus zu öffnen und zu schließen. Hierdurch läßt sich beispielsweise bei Sicherheitstransporten eine Erhöhung der Sicherheit sowohl für den Fahrer als auch für die transportierten Wertgegenstände erreichen.

Ein weiterer Vorteil der Erfindung besteht darin, daß eine schonende Bewegung der Schiebetür ermöglicht wird. Da zur Überwindung der Schließwiderstände die Schiebetür bei manueller Betätigung mit einer erheblichen Geschwindigkeit in die Schließstellung bewegt werden muß, unterliegen die Führungen und die Lager einer erheblichen Belastung. Dies gilt umsomehr für Sicherheitstransporter, da hier in der Regel zur Panzerung verschiedene Verstärkungen in der Türwandung vorgesehen sind, die die Massenträgheit der Schiebetür und damit auch die Belastung der Führungen und Lager weiter erhöhen. Bei einem automatischen Antrieb kann dagegen die Schiebetür kontrolliert bewegt werden, so daß sich eine erhöhte Zuverlässigkeit der Schiebetür erreichen läßt.

Eine bevorzugte Ausführungsform der weiteren erfindungsgemäßen Lösung besteht insbesondere darin,
- daß zumindest die Schließstellung, die Zwischenstellung und die Öffnungsstellung der Schiebetür durch Positionsgeber erfaßbar sind und daß eine Steuereinheit vorgesehen ist, die durch Auswerten der Signale der Positionsgeber das Zusammenwirken von Hauptantrieb und Hilfsantrieb steuert; und/oder
- daß der Hauptantrieb aus einem Elektromotor besteht, dessen Antriebsritzel eine an der Schiebetür befestigte Zahnstange kämmt, wobei der Elektromotor gegenüber der Wandung durch eine Schubstange in Richtung parallel zur Wandung abgestützt und in Richtung senkrecht zur Wandung verschiebbar gelagert ist und gegenüber der Schiebetür durch in Führungsschienen laufenden Rollen in Richtung senkrecht zur Schiebetür abgestützt und in Richtung parallel zur Schiebetür verschiebbar gelagert ist; und/oder
- daß zwischen Abtriebswelle und Antriebsritzel des Elektromotors ein selbsthemmendes Getriebe zwischengeschaltet ist; und/oder
- daß der Hilfsantrieb aus einem Elektromotor besteht, der eine Zugkralle über eine auf einer Gewindespindel laufenden Spindelmutter antreibt, wobei die Zugkralle in ein Widerlager der Schiebetür eingreift, sobald die Schiebetür in Richtung Schließstellung die Zwischenstellung erreicht; und/oder
- daß eine Feder vorgesehen ist, die bei Bewegung der Zugkralle in die Schließstellung eine Vorspannung zwischen Schiebetür und Zugkralle aufbaut; und/oder
- daß das Spindelgetriebe ein selbsthemmendes Getriebe ist, so daß die Zugkralle in Schließstellung in Verbindung mit den Anschlägen der Wandung eine Verriegelung der Schiebetür bewirkt; und/oder
- daß als Positionsgeber Schaltelemente vorgesehen sind; und/oder
- daß als Positionsgeber zusätzlich ein oder mehrere Impulsgeber vorgesehen sind, die nach einer bestimmten Positionsveränderung der Schiebetür jeweils einen Impuls abgeben; und/oder
- daß die Steuereinheit die Öffnungsbewegung der Schiebetür nur an vorbestimmten Standorten und/oder in vorgegebenen Zeitintervallen und/oder zu vorbestimmten Zeitpunkten zuläßt; und/oder
- daß die Steuereinheit aus einem Mikrocontroller besteht.

Nach einer bevorzugten Ausführungsform ist vorgesehen, daß zumindest die Schließstellung, die Zwischenstellung und die Öffnungsstellung der Schiebetür durch Positionsgeber erfaßbar sind und daß eine Steuereinheit, die die Signale der entsprechenden Positionsgeber auswertet, das Zusammenwirken von Hauptantrieb und Hilfsantrieb steuert.

Nach einer weiteren bevorzugten Ausführungsform ist vorgesehen, daß der Hauptantrieb aus einem Elektromotor besteht, dessen Antriebsritzel eine an der Schiebetür befestigte Zahnstange kämmt. Der Elektromotor muß dabei zum einen ortsfest an die Wandung angelenkt sein, zum anderen aber auch die nicht parallel zur Wandung stattfindenden Bewegungen der Schiebetür ausgleichen können. Dies geschieht vorzugsweise dadurch, daß der Elektromotor gegenüber der Wandung durch eine Schubstange in Richtung parallel zur Wandung abgestützt und in Richtung senkrecht zur Wandung verschiebbar gelagert ist und gegenüber der Schiebetür durch in Führungsschienen laufenden Rollen in Richtung senkrecht zur Schiebetür abgestützt und in Richtung parallel zur Schiebetür verschiebbar gelagert ist.

Vorzugsweise hat der Hauptantrieb der Schiebetür eine selbsthemmende Wirkung, damit die Schiebetür außerhalb der Schließstellung in jeder weiteren Stellung automatisch gesichert ist.

Nach einer weiteren bevorzugten Ausführungsform ist vorgesehen, daß der Hilfsantrieb aus einem Elektromotor besteht, der eine Zugkralle über eine auf einer Gewindespindel laufenden Spindelmutter antreibt. Die Zugkralle greift dabei in ein Widerlager der Schiebetür ein, sobald die Schiebetür in Richtung Schließstellung die Zwischenstellung erreicht. Vorzugsweise ist als Widerlager ein an der Schiebetür befestigter hammerförmiger Bolzen vorgesehen, der in die Zugkralle eingreift und somit in Bewegungsrichtung der Zugkralle mit dieser formschlüssig verbunden ist. Außerdem ist zweckmäßigerweise eine Feder vorgesehen, die bei Bewegung der Zugkralle in die Schließstellung eine Vorspannkraft zwischen Schiebetür und Zugkralle aufbaut. Hierdurch wird sichergestellt, daß sich die Zugkralle stets in sicherem Eingriff mit dem Widerlager befindet. Nachdem die Zugkralle die Schiebetür in die Schließstellung gezogen hat, ist die Schiebetür automatisch durch die selbsthemmende Wirkung des Spindelgetriebes verriegelt.

Nach einer weiteren bevorzugten Ausführungsform der Erfindung ist vorgesehen, daß als Positionsgeber Schaltelemente verwendet werden, die die Schließstellung, die Zwischenstellung und die Öffnungsstellung der Schiebetür detektieren. Um eine höhere Ortsauflösung für die Positionserfassung der Schiebetür zu erreichen, können zusätzlich durch den Hauptantrieb wie auch durch den Hilfsantrieb Impulsgeber angetrieben werden, die nach einer bestimmten Positionsveränderung jeweils einen Impuls abgeben.

Zweckmäßigerweise besteht die Steuereinheit aus einem Mikrocontroller oder aus einem Mikrocomputer, so daß sich die Steuerlogik als Steuerprogramm leicht und flexibel an die jeweiligen Gegebenheiten anpassen läßt. Das Steuerprogramm wertet dabei die jeweiligen Signale der Positionsgeber aus und setzt diese in Steuersignale an den Hauptantrieb und an den Hilfsantrieb um, so daß sich eine weitgehend ruckfreie Öffnungs- und Schließbewegung der Schiebetür ergibt.

Die erfindungsgemäße Schiebetür läßt sich vorzugsweise für Sicherheitstransporter verwenden. Durch eine automatische Betätigung der Schiebetür ist es dem Fahrer des Sicherheitstransporters somit möglich, während der Beladung bzw. Entladung der zu transportierenden Wertgüter in der Fahrerkabine zu verbleiben. Außerdem können die sonst auftretenden Probleme durch die mit der Panzerung verbundenen Gewichtserhöhung der Schiebetür in Form von Lagerverschleiß oder Verschleiß der Verriegelungsvorrichtung durch die automatische Betätigung weitgehend vermieden werden. Im Gegensatz zur manuellen Betätigung einer Fahrzeug-Schiebetür ist eine sanfte und schonende Öffnungs- und Schließbewegung der Schiebetür möglich, so daß auch bei einer Gewichtserhöhung der Schiebetür die beweglichen Teile einer geringeren Belastung unterworfen sind. Nach einer weiteren Ausgestaltung ist außerdem vorgesehen, daß die Steuereinheit die Öffnungsbewegung der Schiebetür nur an vorbestimmten Standorten und/oder in vorgegebenen Zeitintervallen und/oder zu vorbestimmten Zeitpunkten zuläßt. Diese Ausgestaltung der Erfindung stellt sicher, daß sich bei einem Sicherheitstransport die Schiebetür nur am Zielort und gegebenenfalls auch nur bei sachgemäßer Bedienung öffnen läßt. Mit einer derartigen zusätzlichen Sicherung kann somit einer Ausraubung durch ungetreues Personal oder auch einem Überfall vorgebeugt werden, weil entsprechende Eingriffe als nicht erfolgreich durchführbar erscheinen müssen.

Weitere Einzelheiten und Vorteile der Erfindung werden anhand eines in der Zeichnung dargestellten Ausführungsbeispiels näher erläutert. In dieser zeigt
- Fig. 1: eine Draufsicht auf eine mit einer Spindel verbundenen Schiebetür mit zugehörigem rahmenfesten, die Spindelmutter antreibenden Getriebemotor,
- Fig. 2: eine vergrößerte Darstellung nur des Spindeltriebs nach Fig. 1,
- Fig. 3: einen vertikalen Schnitt durch die Schiebetür mit Rollenführung und Spindeltrieb,
- Fig. 4: einen vertikalen Schnitt durch die Schiebetür, die verschieblich in Teleskopschienen gelagert ist, mit dem aus einer Spindel bestehenden Linearantrieb,
- Fig. 5: eine schematische Draufsicht auf die Schiebetür mit kopf- und bodenseitig angeordneten Rollensätzen,
- Fig. 6: eine vergrößerte Darstellung eines aus drei Laufrollen bestehenden Rollensatzes,
- Fig. 7: ein Blockschaltbild des elektronischen Teils der erfindungsgemäßen Schiebetür innerhalb eines gepanzerten Fahrzeugs,
- Fig. 8: ein Blockschaltbild des elektronischen Teils der erfindungsgemäßen Schiebetür außerhalb eines gepanzerten Fahrzeugs in Form einer zentralen Leitstelle,
- Fig. 9: einen Schnitt durch eine Fahrzeug-Schiebetür und den zugehörigen Hauptantrieb und
- Fig. 10: eine schematische Darstellung des Hilfsantriebs der Fahrzeug-Schiebetür aus Fig. 9.

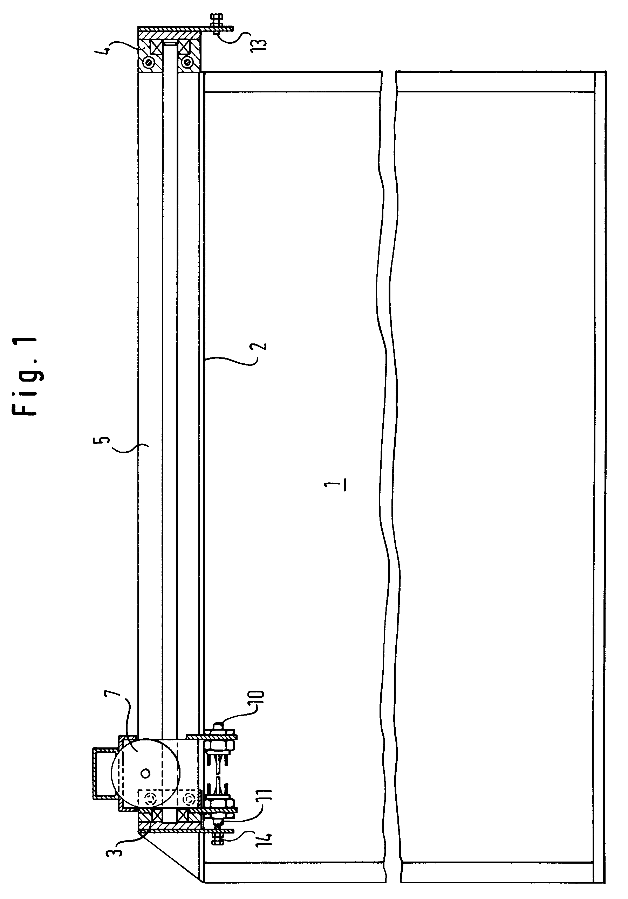

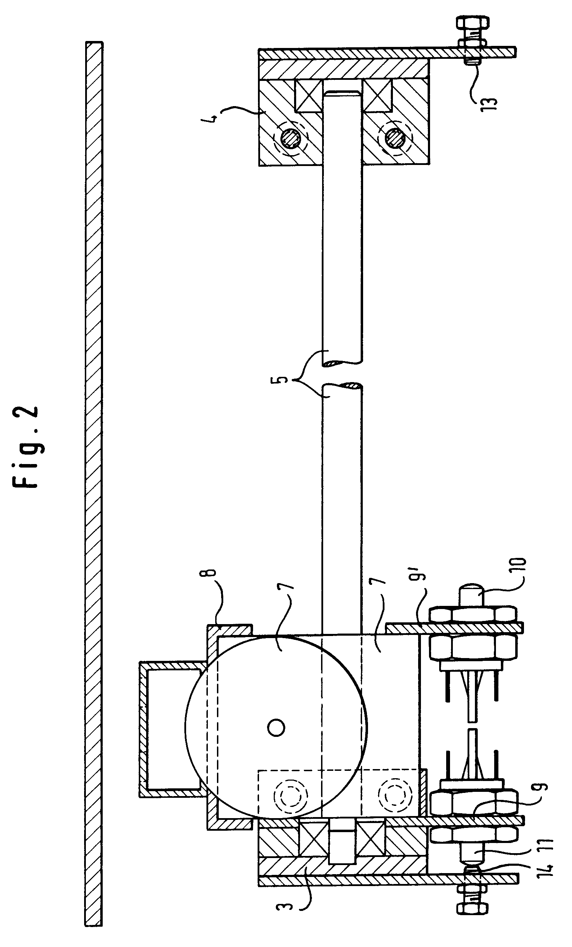

Aus den Fig. 1 und 2 ist eine Schiebetür 1 ersichtlich, deren oberes Rahmenprofil 2 mit Tragstücken 3, 4 verschraubt oder verschweißt ist, die der Halterung der Spindel 5 dienen. In dem linken Tragstück 3 ist das linke Ende der Spindel 5 fest eingespannt, während das rechte Ende der Spindel 5 in einer Bohrung des rechten Tragstücks 4 verschieblich gehaltert ist.

Die Spindel 5 ist in eine Spindelmutter eingeschraubt, die von dem elektrischen Getriebemotor 7 angetrieben ist und den Ausgang des Getriebemotors bildet. Der Getriebemotor 7 ist an einem Rahmenprofil 8, das fest mit der Karosserie verbunden ist, gehaltert. Mit dem Getriebeteil des Getriebemotors 7 sind mit Mikroschaltern versehene Haltestücke 9, 9' verschraubt, wobei die Betätigungsstößel 10, 11 der Mikroschalter mit einstellbaren Anschlägen 13, 14 der Tür 1 zusammenwirken. Die Mikroschalter bilden Endlagenschalter, die den Getriebemotor 7 stillsetzen, wenn die Schiebetür ihre geöffnete Stellung oder ihre Verschlußstellung erreicht hat.

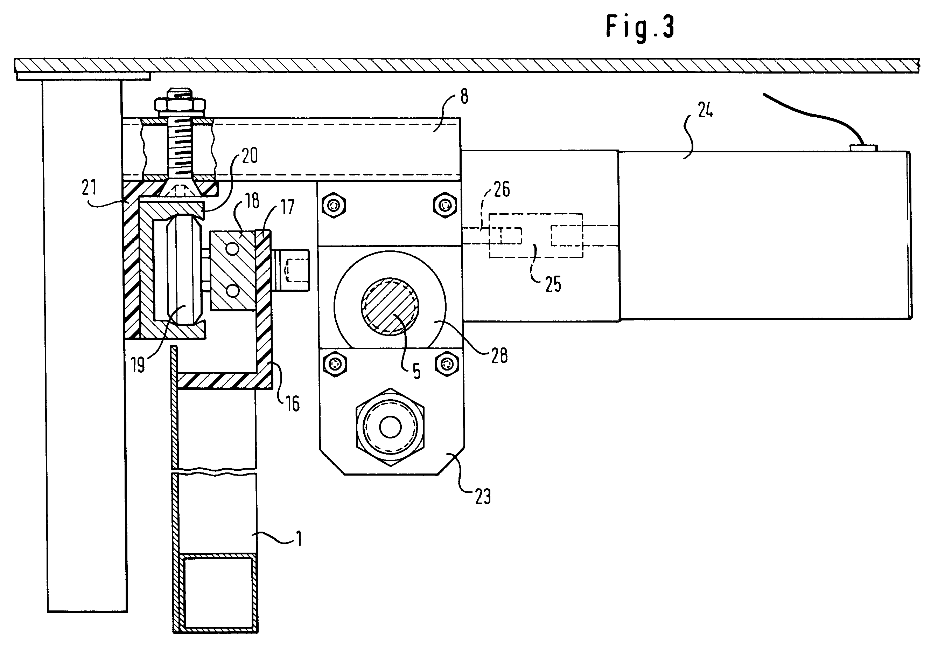

Wie aus Fig. 1 ersichtlich ist, ist die obere Seite 1 der Schiebetür mit einem Winkelprofil 16 verbunden, mit dessen aufragenden Schenkel 17 Lager 18 für Laufrollen 19 verbunden sind. Die Laufrollen 19 laufen in einer C-förmig profilierten Führungsschiene 20, die höhenverstellbar in einem Winkelprofil 21 gehaltert ist, das mit der Halte- und Rahmenkonstruktion 8 der Karosserie verbunden ist. An einen auskragenden Träger der Halte- und Rahmenkonstruktion ist in der aus Fig. 3 ersichtlichen Weise der aus dem Getriebe 23 und dem Motor 24 bestehende Getriebemotor gehaltert. Der Motor 24 ist in üblicher Weise durch eine Wellenkupplung 25 mit der Eingangswelle 26 des Getriebe 23 gekuppelt. Den Ausgang des Getriebes bildet eine drehbar in dem Getriebe 23 gelagerte Spindelmutter 28, in die die Spindel 5 eingeschraubt ist.

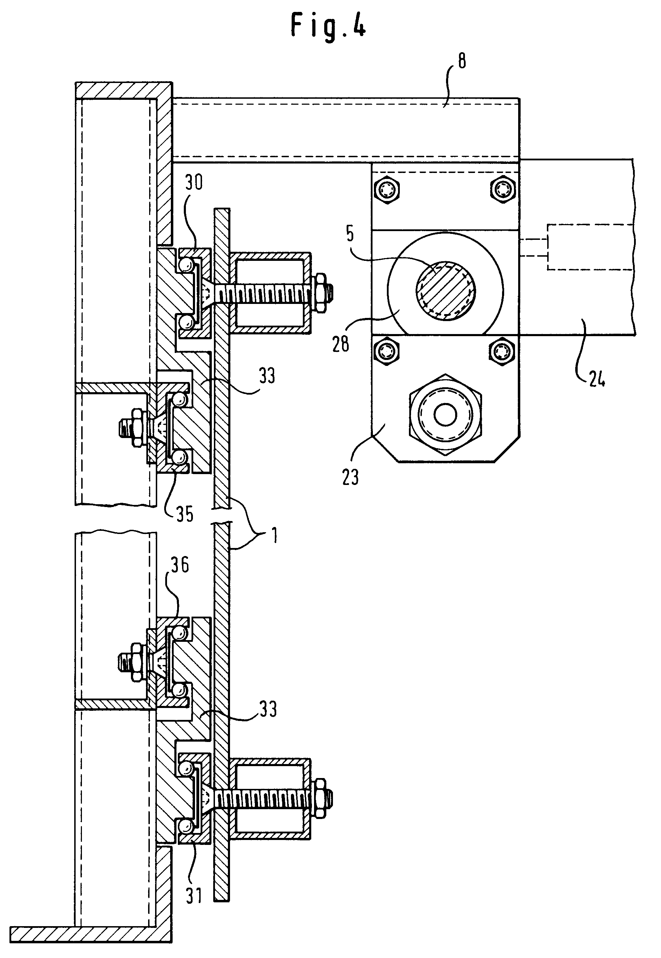

Die aus Fig. 4 ersichtliche Darstellung unterscheidet sich von der nach Fig. 3 im wesentlichen nur dadurch, daß die gepanzerte Schiebetür 1 mit C-förmigen Führungsschienen 30, 31 versehen ist, in denen S-förmige Teleskopschienen 33 geführt sind, deren äußeren Schenkel in C-förmigen Führungsschienen 35, 36 der Karosserie geführt sind. Die in die C-förmigen Führungen greifenden Stege der S-förmigen Teleskopschienen sind über in Käfigen gehaltene Kugeln gegenüber den Flanken der Führungsschienen abgestützt und geführt.

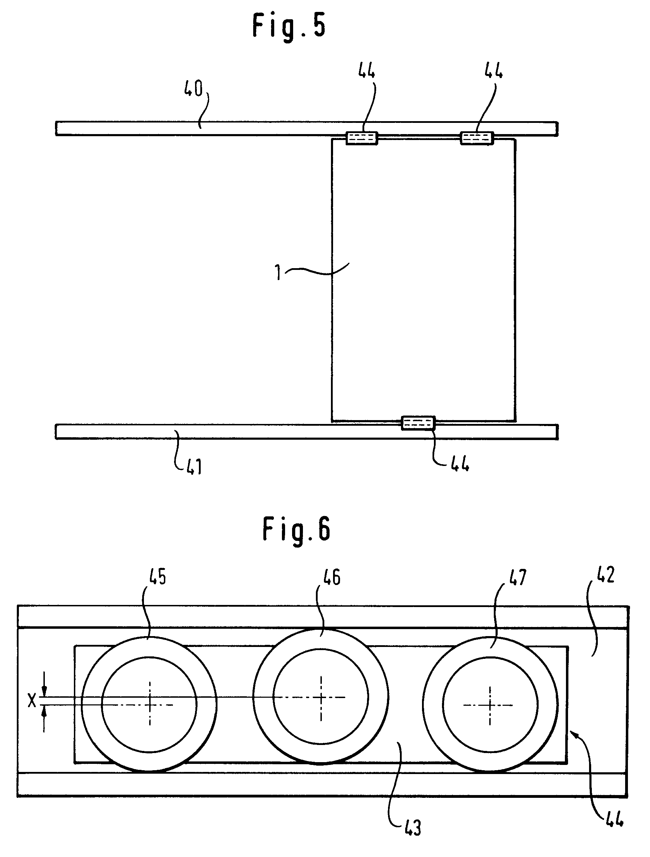

Aus Fig. 5 sind obere und untere Führungsschienen 40, 41 ersichtlich, die karosseriefest gehaltert sind. Die Führungsschienen 40, 41 bestehen in der aus Fig. 6 ersichtlichen Weise aus U-förmigen Profilen 42. Die Tür 1 ist an ihrer oberen und unteren Seite mit in Lagerstücken 43 gelagerten Rollensätzen 44 versehen, wobei jeder Rollensatz auf drei Rollen 45, 46, 47 besteht. Die mittlere Rolle 46 jedes Rollensatzes ist in vertikaler Richtung um die Strecke x verstellbar, so daß die Rollen jedes Rollensatzes derart eingestellt werden können, daß jeweils zwei Rollen auf einer Flanke eines Schenkels der Profilschiene und eine Rolle auf der Flanke des gegenüberliegenden Schenkels der Profilschiene läuft.

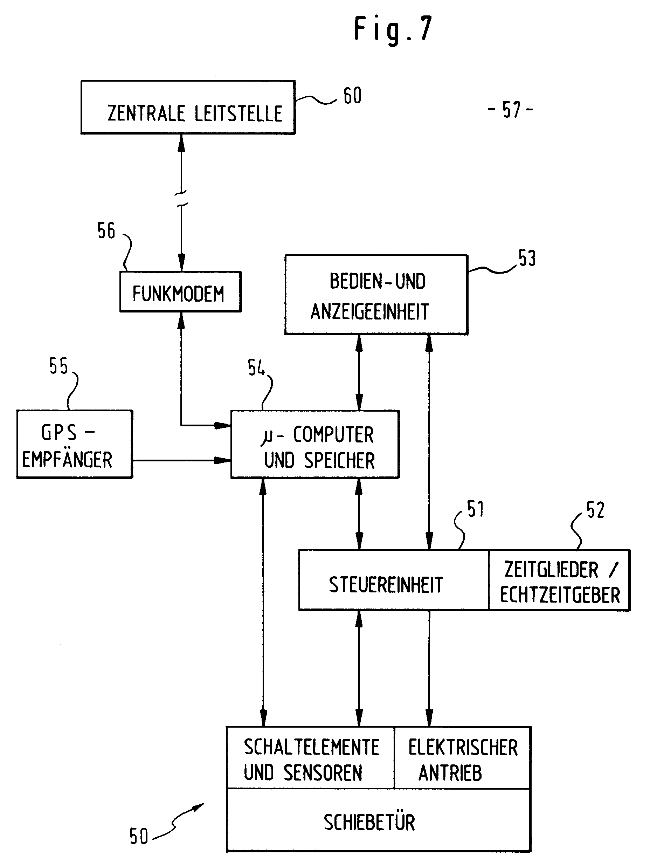

Fig. 7 zeigt ein Ausführungsbeispiel des elektronischen Teils der erfindungsgemäßen Schiebetür innerhalb eines gepanzerten Fahrzeugs 57. Eine Steuereinheit 51 ist mit dem elektrischen Antrieb und den Schaltelementen und Sensoren der Schiebetür 50 elektrisch verbunden. Neben elektronischen Bauelementen sind in der Steuereinheit 51 Zeitglieder 52 integriert, die gegebenenfalls auch einen Echtzeitgeber umfassen. Zur Betätigung des Schlosses sowie zur Anzeige besonderer Informationen ist eine Bedien- und Anzeigeeinheit 53 an die Steuereinheit angeschlossen.
In dieser Grundkonfiguration ist die erfindungsgemäße Schiebetür bereits funktionsfähig. Im folgenden wird zunächst der Funktionsablauf einer Öffnungsbewegung der Schiebetür näher beschrieben.

Wird über ein Anzeigeelement auf der Anzeigeeinheit die Öffnungsmöglichkeit der Schiebetür signalisiert, kann mit einem Bedienschalter eine Öffnungsbewegung der Schiebetür ausgelöst werden. Wird der entsprechende Bedienschalter betätigt, schaltet die Steuereinheit den elektrischen Antrieb ein, so daß die Schiebetür in die Öffnungsposition fährt. Ist die Endposition der Schiebetür erreicht, wird dies von der Steuereinheit über ein Schaltelement erfaßt und die Steuereinheit schaltet sodann den elektrischen Antrieb wieder aus. Außerdem wird durch die Betätigung des Bedienschalters ein Zeitglied gestartet, nach dessen Ablauf die Schiebetür automatisch wieder geschlossen wird, falls der zu sichernde Raum in dem betreffenden Zeitraum durch die Tür nicht betreten wurde. Im anderen Fall wird das Betreten des zu sichernden Raumes durch die Tür über einen Sensor, z.B. eine Lichtschranke, detektiert und das betreffende Zeitglied wird deaktiviert, so daß die Schiebetür in der Öffnungsposition verbleibt.

Ein Schließen der Tür kann über einen weiteren Bedienschalter veranlaßt werden. Spezielle Zeitglieder oder Sperrvorrichtungen gegenüber unbefugter Bedienung sind für das Schließen der Schiebetür nicht erforderlich, allerdings muß durch Lichtschranken oder dergleichen sichergestellt werden, daß sich keine Person oder kein Gegenstand im Bewegungsbereich der Schiebetür befindet. Aus Sicherheitsgründen muß außerdem der elektrische Antrieb von der Steuereinheit ausgeschaltet werden, sobald eine Überlastung des Antriebs detektiert wird.

Zur Erweiterung der beschriebenen Funktionen ist ein Mikrocomputer mit Speicher 54 an die Steuereinheit 51, die Bedien- und Anzeigeeinheit 53 sowie an die Schaltelemente und Sensoren der Schiebetür 50 angeschlossen. Über diesen Mikrocomputer werden Informationen vorprogrammiert und während der Fahrt abgespeichert. Insbesondere werden die von einem Sensor erfaßten Öffnungsbewegungen der Schiebetür in einem nichtflüchtigen Speicher zusammen mit der Zeitinformation des Echtzeitgebers abgespeichert. Zum Vergleich einer vorprogrammierten Fahrroute mit dem tatsächlichen Standort des Fahrzeugs liefert ein GPS-Empfänger 55 die aktuellen Koordinaten des Fahrzeugs 57 an den Mikrocomputer 54. Über ein Funkmodem 56 kann eine Kommunikation zwischen dem Mikrocomputer 54 und einer zentralen Leitstelle 60 aufgebaut werden, um Fahrzeugdaten zu übermitteln oder um umgekehrt Steueranweisungen an die Steuereinheit 51 zu leiten.

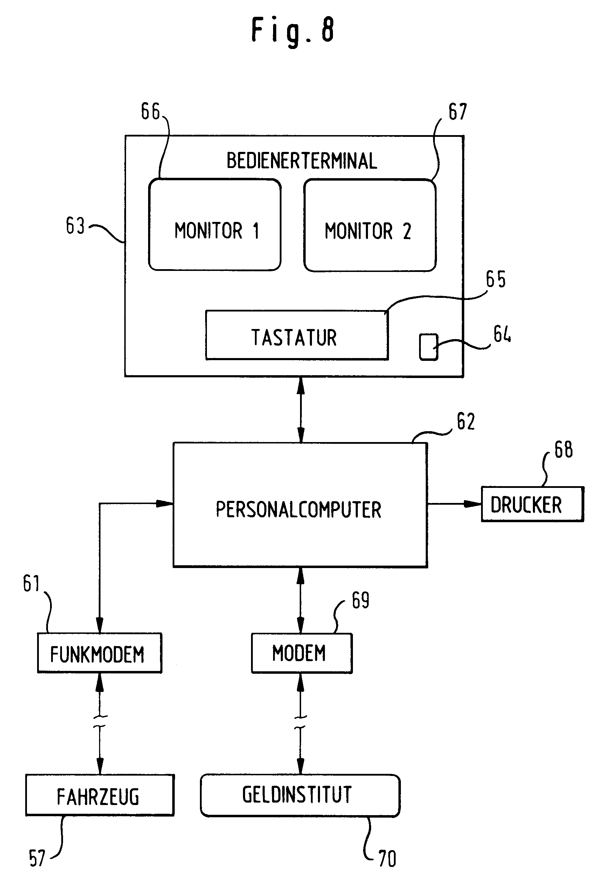

Fig. 8 zeigt eine zentrale Leitstelle 60 als Ausführungsbeispiel des elektronischen Teils der erfindungsgemäßen Schiebetür außerhalb eines gepanzerten Fahrzeugs 57. Über ein Funkmodem 61 wird eine Kommunikation zwischen dem gepanzerten Fahrzeug 57 und einem zentralen Personalcomputer 62 aufgebaut. Hierdurch können sämtliche Funktionen zur Ansteuerung des elektrischen Antriebes 7 auch außerhalb Fahrzeugs durchgeführt werden. Zusätzlich läßt sich der elektrische Antrieb von der zentralen Leitstelle mit Vorrang vor anderen Funktionen der Steuereinheit sperren. Weiterhin ist ein die Bewegung der Schiebetür erfassender Sensor so geschaltet, daß jede nicht vorgesehene Öffnungsbewegung der Schiebetür einen Alarm in der zentralen Leitstelle auslöst.

Zur Bedienung der zentralen Leitstelle ist der Personalcomputer 62 mit einem Bedienerterminal 63 verbunden. Auf einem der beiden Monitore 66,67 kann die aktuelle Fahrtroute des gepanzerten Fahrzeugs verfolgt werden. Das Bedienerterminal 63 weist außerdem eine Tastatur 65 und eine Maus 64 auf. Zur Protokollierung wichtiger Ereignisse ist ein Drucker 68 an den Personalcomputer 62 angeschlossen. Ferner besteht über ein Modem 69 die Möglichkeit, Geldbeträge des transportierten Geldes direkt mit einem Geldinstitut 70 zu verbuchen, um so eine schnelle Wertstellung des Geldes zu ermöglichen.

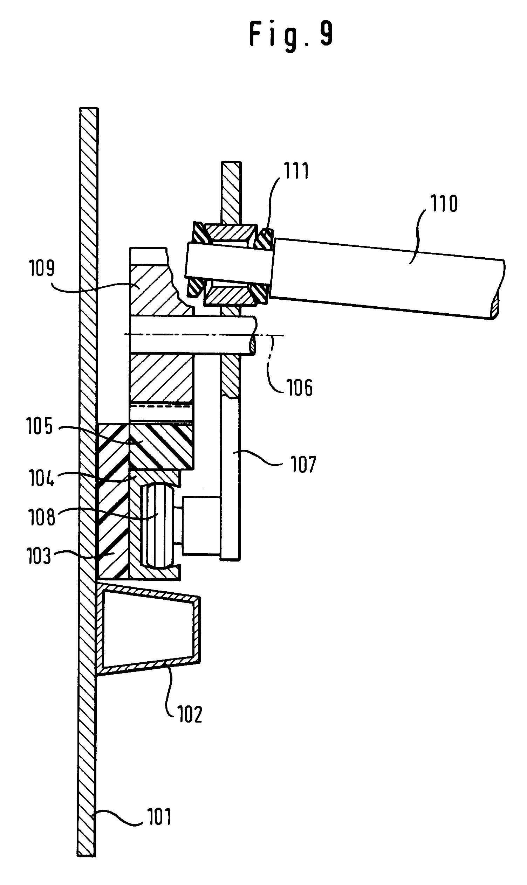

Fig. 9 verdeutlicht die Wirkungsweise des Hauptantriebs für eine Fahrzeug-Schiebetür. Die Fahrzeug-Schiebetür 101 ist an ihrer Innenseite mit einer Rahmenkonstruktion 102 verstärkt. An ihrer Ober- und Unterseite befinden sich nicht näher dargestellte Laufrollen, die in Führungsschienen laufen. Um die Antriebsmittel mit der Schiebetür zu verbinden, ist auf der Innenseite der Schiebetür eine Halteschiene 103 aufgeklebt. An diese Halteschiene sind eine Führungsschiene 104 sowie eine Zahnstange 105 befestigt. In der Führungsschiene laufen mehrere Laufrollen 108, die ihrerseits an einer Motorgrundplatte 107 befestigt sind. Hierdurch ist die Motorgrundplatte 107 in Richtung parallel zur Schiebetür verschiebbar gelagert und in Richtung senkrecht zur Schiebetür abgestützt. Auf der Grundplatte 107 ist in nicht näher dargestellter Weise ein Elektromotor angeflanscht, dessen Motorachse 106 ein Antriebsritzel 109 antreibt, das mit der Zahnstange 105 im Eingriff steht. Um den Hauptantrieb für die Schiebetür in Richtung der Bewegungsrichtung der Schiebetür gegenüber der Karosserie abzustützen, ist eine Schubstange 110 vorgesehen, die mit der Motorgrundplatte 107 durch eine Gummibuchse 111 verbunden ist. Durch die Gummibuchse ist es möglich, daß geringfügige Verkantungen der Schubstange 110 gegenüber der Motorgrundplatte 107 ausgeglichen werden. An ihrem anderen Ende ist die Schubstange 110 in nicht näher dargestellter Weise in einer Lagerhülse geführt, die mit der Karosserie des Fahrzeugs fest verbunden ist. Der Hauptantrieb mit der Motorgrundplatte 107 ist somit durch die Schubstange 110 gegenüber der Karosserie in der Bewegungsrichtung der Schiebetür abgestützt und senkrecht zu der Bewegungsrichtung der Schiebetür mit der Karosserie verschiebbar gelagert.

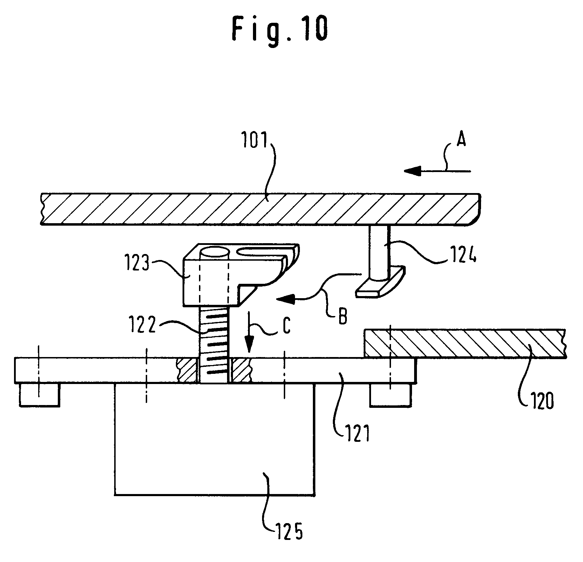

Fig. 10 zeigt eine schematische Darstellung des Hilfsantriebs der Schiebetür aus Fig. 9. An der Schiebetür 101, die hier im Schnitt längs zur Bewegungsrichtung A zu sehen ist, ist ein hammerförmiger Bolzen 124 derart befestigt, daß dieser bei Bewegung der Schiebetür in Richtung Schließstellung in eine Zugkralle 123 eingreifen kann. Die Zugkralle 123 ist ihrerseits am Ende einer Gewindespindel 122 befestigt, die über eine auf der Gewindespindel laufenden Spindelmutter durch einen zweiten Elektromotor 125 angetrieben wird. Der Elektromotor 125 ist an der Befestigungsplatte 121 angeflanscht, die fest mit der Karosserie 120 verbunden ist.

Das Zusammenwirken von dem Hauptantrieb gemäß Fig. 9 und von dem Hilfsantrieb gemäß Fig. 10 erfolgt durch eine nicht näher gezeigte Steuereinheit. Die Steuereinheit wertet dabei die Signale von drei Positionsgebern der Schiebetür aus, welche die Öffnungsstellung, die Zwischenstellung und die Schließstellung der Schiebetüren detektieren, wobei die Öffnungsstellung durch den Anfang der Bewegung A, die Zwischenstellung durch das Ende der Bewegung B und die Schließstellung durch das Ende der Bewegung C definiert sind.

Befindet sich die Schiebetür beispielsweise in der Öffnungsstellung, so bewirkt ein Befehl an die Steuereinheit zum Schließen der Schiebetür den folgenden Funktionsablauf:

Zunächst wird durch die Steuereinheit der Hauptantrieb eingeschaltet, so daß durch das sich drehende Antriebsritzel 109 die Schiebetür in die Richtung A bewegt wird. Am Ende der Bewegung A greift der hammerförmige Bolzen 124 in die Zugkralle 123 ein, wobei die Schiebetür die durch B angedeutete Bewegung ausführt. Am Ende der Bewegung B detektiert ein Positionsgeber das Erreichen der Zwischenstellung, so daß der Hauptantrieb ausgeschaltet wird. Gleichzeitig ist damit ein Einschalten des Hilfsantriebs verbunden, so daß die über das Spindelgetriebe angetriebene Zugkralle 123 sich in die Richtung C bewegt. Am Ende der Bewegung C detektiert ein weiterer Positionsgeber das Erreichen der Schließstellung der Schiebetür, was ein Abschalten des Hilfsantriebs durch die Steuereinheit zur Folge hat. Da die Schiebetür durch die Zugkralle in der Schließstellung gegen die Anschläge des Karosserierahmens gedrückt wird, ist die Schiebetür durch die selbsthemmende Wirkung des Spindelantriebs gleichzeitig verriegelt. Ein umgekehrter Funktionsablauf ergibt sich, wenn an die Steuereinheit ein Befehl zum Öffnen der Schiebetür gelangt.

## Patentansprüche

1. Gepanzerte Schiebetür für gegen Einbruch, Beschuß, Aufbruch und unbefugten Zugang zu sichernde Räume, vorzugsweise für gepanzerte Fahrzeuge zum Transport von Geld und/oder Wertgegenständen oder von zu sichernden Personen, die in Führungen der mit der Türöffnung versehenen Wand oder angrenzender Teile verschieblich geführt ist,
**dadurch gekennzeichnet**,
daß im Bereich der Oberseite und/oder Unterseite Schiebetürrollen oder Gleitelemente befestigt sind, die in den Führungen laufen, und daß ein mit einem Elektromotor versehener, selbsthemmender Linearantrieb vorgesehen ist, der die Schiebetür zwischen ihrer geöffneten und ihrer geschlossenen Stellung bewegt.

2. Schiebetür nach Anspruch 1, dadurch gekennzeichnet, daß die Rollen aus mehreren Rollensätzen von jeweils drei um horizontale Achsen umlaufenden Rollen bestehen, von denen das Lager der mittleren Rolle jedes Rollensatzes in vertikaler Richtung verstellbar ist.

3. Schiebetür nach Anspruch 1 oder 2, dadurch gekennzeichnet, daß die Rahmenkonstruktion der Schiebetür durch Hohlräume und/oder Hohlträger verstärkt ist, deren Hohlräume mit einem mit extrem harten Granulat gefülltem Harz verfüllt sind.

4. Schiebetür nach einem der Ansprüche 1 bis 3, dadurch gekennzeichnet, daß der Elektromotor mit einer Steuereinrichtung versehen ist, die die Öffnungsbewegung der Schiebetür durch willkürliche Betätigung eines Öffnungsschalters nur an vorbestimmten und/oder ungefährlichen Standorten und/oder in vorgegebenen Zeitintervallen zuläßt.

5. Schiebetür nach einem der Ansprüche 1 bis 4, dadurch gekennzeichnet, daß ein die Bewegung der Schiebetür unmittelbar oder mittelbar erfaßender Sensor vorgesehen ist, der mit einem Echtzeitgeber gekoppelt ist, und daß die von dem Sensor erfaßten Öffnungsbewegungen der Schiebetür mit den zugehörigen Zeiten in einen auslösbaren Speicher der Steuer- und Überwachungseinheit abgelegt werden.

6. Schiebetür nach dem Oberbegriff des Patentanspruchs 1, insbesondere Fahrzeug-Schiebetür, die in Schließstellung bündig mit der umgebenden Wandung abschließt und die im geöffneten Zustand parallel versetzt zur Schließstellung zwischen einer Zwischenstellung und einer Öffnungsstellung in Führungen entlang der Wandung bewegbar ist,
**dadurch gekennzeichnet**,
daß ein mit einem Elektromotor versehener Hauptantrieb vorgesehen ist, der die Schiebetür zwischen der Öffnungsstellung und der Zwischenstellung im wesentlichen parallel zur Wandung bewegt und
daß ein mit einem Elektromotor versehener Hilfsantrieb vorgesehen ist, der die Schiebetür unabhängig vom Hauptantrieb zwischen der Zwischenstellung und der Schließstellung im wesentlichen senkrecht zur Wandung bewegt.

7. Schiebetür nach Anspruch 6, dadurch gekennzeichnet, daß zumindest die Schließstellung, die Zwischenstellung und die Öffnungsstellung der Schiebetür durch Positionsgeber erfaßbar sind und daß eine Steuereinheit vorgesehen ist, die durch Auswerten der Signale der Positionsgeber das Zusammenwirken von Hauptantrieb und Hilfsantrieb steuert.

8. Schiebetür nach Anspruch 6 oder 7, dadurch gekennzeichnet, daß der Hauptantrieb aus einem Elektromotor besteht, dessen Antriebsritzel eine an der Schiebetür befestigte Zahnstange kämmt, wobei der Elektromotor gegenüber der Wandung durch eine Schubstange in Richtung parallel zur Wandung abgestützt und in Richtung senkrecht zur Wandung verschiebbar gelagert ist und gegenüber der Schiebetür durch in Führungsschienen laufenden Rollen in Richtung senkrecht zur Schiebetür abgestützt und in Richtung parallel zur Schiebetür verschiebbar gelagert ist.

9. Schiebetür nach einem der Ansprüche 6 bis 8, dadurch gekennzeichnet, daß der Hilfsantrieb aus einem Elektromotor besteht, der eine Zugkralle über eine auf einer Gewindespindel laufenden Spindelmutter antreibt, wobei die Zugkralle in ein Widerlager der Schiebetür eingreift, sobald die Schiebetür in Richtung Schließstellung die Zwischenstellung erreicht.

10. Schiebetür nach einem der Ansprüche 6 bis 9, dadurch gekennzeichnet, daß die Steuereinheit die Öffnungsbewegung der Schiebetür nur an vorbestimmten Standorten und/oder in vorgegebenen Zeitintervallen und/oder zu vorbestimmten Zeitpunkten zuläßt.
